# EUROPÄISCHE PATENTSCHRIFT

(11) **EP 2 015 979 B1**
(45) Veröffentlichungstag und Bekanntmachung des Hinweises auf die Patenterteilung: **20.08.2014**
(21) Anmeldenummer: 07724452.3
(22) Anmeldetag: 23.04.2007
(51) Int. Cl.: B62D 29/04, C08L 67/00, C08L 101/00

(54) **LEICHTBAUTEIL IN HYBRIDBAUWEISE**
LIGHTWEIGHT COMPONENT WITH A HYBRID CONSTRUCTION
COMPOSANT LÉGER PRÉSENTANT UNE STRUCTURE HYDRIDE

(30) Priorität: 04.05.2006 DE 102006020984
(43) Veröffentlichungstag der Anmeldung: 21.01.2009
(73) Patentinhaber: LANXESS Deutschland GmbH, 50569 Köln (DE)
(72) Erfinder: MALEK, Thomas, 50259 Pulheim (DE); KOCH, Boris, 42929 Wermelskirchen (DE); JOACHIMI, Detlev, 47800 Krefeld (DE); KLINGELHÖFER, Stefanie, 21039 Hamburg (DE); WAMBACH, Wolfgang, 51065 Köln (DE); KLOCKE, Martin, 40215 Düsseldorf (DE)
(86) Internationale Anmeldenummer: PCT/EP2007/003520
(87) Internationale Veröffentlichungsnummer: WO 2007/128395

(56) Entgegenhaltungen:
- EP-A- 1 340 668

## Beschreibung

Die vorliegende Erfindung betrifft Leichtbauteile in Hybridbauweise, auch als Hybridbauteil oder Hohlkammer-Leichbauteil bezeichnet, aus einem schalenförmigen Grundkörper, der mittels Themoplasten verstärkt wird und für die Übertragung von hohen mechanischen Belastungen geeignet ist, wobei dem Thermoplasten besondere Fließhilfsmittel zugegeben werden um dessen physikalische Eigenschaften zu verbessern.

Derartige Leichtbauteile finden in entsprechender Gestaltung Verwendung für Fahrzeugteile, in tragenden Elementen von Büromaschinen, Haushaltsmaschinen oder anderen Maschinen oder in Konstruktionselementen für Dekorationszwecke oder dergleichen.

Leichtbauteile in Hydridbauteile, im Folgenden auch Hybridbauteile genannt, zeichnen sich durch den Formschluss eines schalenförmigen zumeist aus Metall bestehenden Grundkörpers bzw. Hohlkörpers und einem in diesen eingefügten oder angefügten Kunststoffteil aus. Im Rahmen der vorliegenden Erfindung werden sie auch als Hohlkammer-Leichtbauteile bezeichnet.

Eine nichtlösbare Verbindung aus zwei oder mehreren Teilen, vorzugsweise aus Metall wobei die Verbindung aus Kunststoff besteht und in einem die zu verbindenden Teile aufnehmenden Werkzeug, beispielsweise im Spritzgussverfahren, hergestellt werden, wird in DE-OS 27 50 982 offenbart. Aus EP-A 0 370 342 ist ein Leichtbauteil in Hybridbauweise aus einem schalenförmigen Grundkörper bekannt, dessen Innenraum Verstärkungsrippen aufweist, welche mit dem Grundkörper fest verbunden sind, indem die Verstärkungsrippen aus angespritztem Kunststoff bestehen und deren Verbindung mit dem Grundkörper an diskreten Verbindungsstellen über Durchbrüche im Grundkörper erfolgt, durch welche der Kunststoff hindurch und über die Flächen der Durchbrüche hinausreicht und ein fester Formschluss erreicht wird. EP-A 0 995 668 ergänzt dieses Prinzip indem man das Hohlkammer-Leichtbauteil zusätzlich mit einer Deckplatte oder Deckschale aus Kunststoff versieht. Denkbar ist aber auch eine Deckplatte aus anderen Materialien wie beispielsweise Metall.

WO 2002/068257 offenbart sogenannte integrierte Strukturen aus Metall und Kunststoff mit der Beschreibung etlicher Befestigungsmittel um beide Komponenten miteinander fest zu verbinden. Das alternative Vorgehen, nämlich in zwei Arbeitsgängen zuerst das schalenförmige Metallteil mit Kunststoff so anzuspritzen, dass der Kunststoff durch Öffnungen im Metallteil hindurch tritt und auf der anderen Seite Grate hinterlässt, die erst in einem zusätzlichen Arbeitsgang durch Umarbeiten zu einem festen Formschluss führen, wird in WO 2004/071741 offenbart. Dass zur Herstellung eines Hybridbauteils der Metallkern nicht vollständig durch den Kunststoff sondern nur abschnittsweise umspritzt sein kann um einen festen Formschluss zu erzielen, wird in EP 1 294 552 B1 offenbart. Eine weitere Variante bei der das Metallteil sowohl oben als auch unten Öffnungen für den festen Formschluss mit dem umspritzten Kunststoff vorsieht, wird in WO 2004/011315 offenbart. WO 2001/38063 beschreibt ein Kunststoffverbundteil aus mindestens zwei flächigen Werkstücken unterschiedlichen Materials, beispielsweise Kunststoff und Metall, unterschiedlichen Metallen oder Kunststoffen, wobei die Werkstücke in ihrem Randbereich miteinander verbunden sind und die Verbindung aus angeformtem, thermoplastischem Kunststoff besteht. Ein plattenförmiges Leichtbauteil in Hybridbauweise wird durch EP 1 223 032 A2 offenbart. US 6,761,187 B1 offenbart ein Hybridbauteil in Form einer Rinne oder eines Rohrs mit integriertem Verschluss aus einem Thermoplasten. Wie man die Metallkomponente für den Einsatz als Hybridbauteil vorbereiten kann um einen festen Formschluss mit dem Thermoplasten zu erzielen, offenbart DE 195 43 324 A1. Die Möglichkeit der Verrippung nicht nur innerhalb des zu verstärkenden Metallteils sondern auch außerhalb dessen durchzuführen, findet sich in EP 1 340 668 A2 oder in EP 1 300 325 A2.

Schon bald erkannte man die hervorragende Eignung von Hohlkammer-Leichtbauteilen in Hybridbauweise überall dort, wo es auf hohe Stabilität, hohe Energieaufzehrung im Falle eines Crash sowie um Gewichtseinsparung ging, also beispielsweise beim Bau von Kraftfahrzeugen. EP 0 679 565 B1 offenbart die Vorderfront eines Kraftfahrzeugs (Kfz) mit mindestens einer steifen Traverse die sich über den Hauptteil der Länge des Vorderfrontteils erstreckt mit mindestens einem Stützteil aus Kunststoff, das oder die am Endbereich der steifen Traverse angegossen wird bzw. werden. EP 1 032 526 B1 offenbart eine Tragestruktur für das Frontmodul eines Kraftfahrzeugs aus einem Stahlblech-Grundkörper, einem unverstärkten amorphen thermoplastischen Kunststoffmaterial, einem glasfaserverstärkten thermoplastischen Kunststoff sowie einer Rippenstruktur aus beispielsweise Polyamid. DE 100 53 840 A1 offenbart ein Stossfängersystem oder Energieabsorberelement aus gegenüberliegend angeordneten Metallblechen und Verbindungsrippen aus thermoplastischem oder duroplastischem Kunststoff. WO 2001/40009 offenbart den Einsatz der Hybridtechnologie in Brems-, Kupplungs- oder Gaspedalen von Kraftfahrzeugen. EP 1 211 164 B1 wiederum beschreibt die Trägerstruktur für eine Kraftfahrzeug-Kühleranordnung in Hybridstruktur. Den Schlossquerträger im Fahrzeug-Frontmodul in Hybridbauweise offenbart DE 101 50 061 A1. Einen Kfz-Querträger in Hybridbauweise beschreibt US 6,688,680 B1. Ein weiteres Beispiel für ein Frontend Panel eines Kfz's findet sich in EP 1 380 493 A2 wobei hier allerdings das Metallteil in Form von Gurten umklammert und nicht vollständig umspritzt wird. Nicht nur für Frontends oder Pedale kann man Leichtbauteile in Hybridbauweise einsetzen, sondern im gesamten Bereich einer Fahrzeugkarosserie. Beispiele liefern hierfür DE 100 18 186 B4 für eine Fahrzeugtür mit Türkasten, EP 1 232 935 A1 für die Fahrzeugkarosserie selber und DE 102 21 709 A1 für die Trägerelemente von Kraftfahrzeugen. Schließlich offenbart EP 1 340 668 A2 ein Leichtbauteil aus einem schalenförmigen Grundkörper, insbesondere aus Metall, der Verstärkungsrippen aus Kunststoff, insbesondere aus thermoplastischem Kunststoff aufweist, welche mit dem Grundkörper fest verbunden sind, wobei die Verstärkungsrippen auf der Außenseite des Grundkörpers angebracht sind und mit dem Grundkörper an diskreten Verbindungsstellen direkt oder indirekt verankert sind.

Hochfließfähige thermoplastische Zusammensetzungen sind für eine Vielzahl von formgebenden Verfahren, beispielsweise Spritzgussanwendungen interessant. Beispielsweise erfordern Dünnwandbauteile in der Elektro-, Elektronik- und Kfz-Industrie niedrige Viskositäten der Thermoplastzusammensetzung, damit ein Füllen der Form bei möglichst geringen Fülldrucken bzw. Schließkräften der entsprechenden Spritzgießmaschinen möglich ist. Dies trifft auch auf das gleichzeitige Füllen von mehreren Spritzgussbauteilen über ein gemeinsames Angusssystem in sogenannten Vielfachwerkzeugen zu. Des Weiteren können häufig mit niederviskosen thermoplastischen Zusammensetzungen auch kürzere Zykluszeiten realisiert werden. Darüber hinaus sind gute Fließfähigkeiten gerade auch bei hochgefüllten thermoplastischen Zusammensetzungen, beispielsweise mit Glasfasergehalten und/oder Mineralgehalten von über 40 Gew.-%, sehr wichtig.

Trotz hoher Fließfähigkeit der thermoplastischen Zusammensetzungen werden jedoch hohe mechanische Anforderungen an die daraus herzustellenden Bauteile selber und insbesondere an daraus herzustellende Hybridbauteile gestellt, so dass durch die Viskositätserniedrigung keine Beeinträchtigung der mechanischen Eigenschaften verursacht werden darf.

Es gibt mehrere Möglichkeiten, hochfließfähige, niederviskose thermoplastische Formmassen zu realisieren.

Eine Möglichkeit ist der Einsatz von niederviskosen Polymerharzen mit geringerem Molekulargewicht als Basispolymere für die thermoplastischen Formmassen. Der Einsatz niedermolekularer Polymerharze ist aber häufig mit Einbußen bei den mechanischen Eigenschaften, insbesondere der Zähigkeit verbunden. Außerdem erfordert die Herstellung eines niederviskosen Polymerharzes auf einer bestehenden Polymerisationsanlage oftmals aufwändige und mit Investitionen verbundene Eingriffe.

Eine andere Möglichkeit ist der Einsatz von sogenannten Fließhilfsmitteln, auch als Fließmittel, Fließhilfen oder innere Gleitmittel bezeichnet, die dem Polymerharz als Additiv zugegeben werden können.

Derartige Fließhilfsmittel sind aus der Literatur wie z.B. Kunststoffe 2000, 9, S. 116-118 bekannt und können beispielsweise Fettsäureester von Polyolen oder Amide aus Fettsäuren oder Aminen sein. Derartige Fettsäureester, wie beispielsweise Pentaerythritoltetrastearat oder Ethylenglykoldimontanoat, sind jedoch mit polaren Thermoplasten wie Polyamiden, Polyalkylenterephthalaten oder Polycarbonaten nur begrenzt mischbar. Sie reichern sich daher an der Formteiloberfläche an und werden deshalb auch als Entformungshilfsmittel eingesetzt. Sie können allerdings besonders bei höheren Konzentrationen, bei Wärmelagerung oder im Falle von Polyamiden auch bei Feuchtigkeitsaufnahme aus diesen Formteilen an die Oberfläche migrieren und sich dort anreichern. Dies kann beispielsweise zu Problemen hinsichtlich Lack- oder Metallhaftung bei beschichteten Formteilen führen.

Alternativ zu diesen oberflächenaktiven Fließhilfsmitteln können interne Fließhilfsmittel eingesetzt werden, die mit den Polymerharzen verträglich sind. Hierfür eignen sich beispielsweise niedermolekulare Verbindungen oder verzweigte, hochverzweigte oder dendritische Polymere mit einer dem Polymerharz ähnlichen Polarität. Derartige hochverzweigte oder dendritische Systeme sind aus der Literatur bekannt und können beispielsweise auf verzweigten Polyestern, Polyamiden, Polyesteramiden, Polyethern oder Polyaminen basieren, wie sie in Kunststoffe 2001, 91, S. 179-190, oder in Advances in Polymer Science 1999, 143 (Branched Polymers II), S. 1-34 beschrieben sind.

Grundsätzlich lassen sich Verbesserungen der Fließfähigkeit von Polyamiden durch Zusatz hochverzweigter Polymere mit starren aromatischen Einheiten, durch Zusatz auf Aromaten basierender Polymere oder durch Zusatz von Phenolen, Bisphenolen und ähnlichen niedermolekularen Additiven erzielen.

Will man aber neben der Fließfähigkeit der Formmassen gleichzeitig das Elastizitätsmodul und somit die Steifigkeit von Formteilen, insbesondere für den Einsatz in Hybridbauteilen, beeinflussen gelangt man mit den Fließverbesserern des Standes der Technik rasch an Grenzen. Auch der Einsatz weiterer Copolymere auf Basis von Ethen und Acrylsäureestern oder Methacrylsäureestern in den einzusetzenden Thermoplasten führt hier nicht zum gewünschten Ergebnis.

Die Aufgabe der vorliegenden Erfindung bestand darin, Hohlkammerleichtbauteile in Hybridbauweise herzustellen, die einerseits die aus dem Stand der Technik bekannten Vorteile wie hohe Knickstabilität, hohe Torsionsstabilität, höhere Festigkeit aufweisen, die sich aber darüber hinaus durch ein geringeres Gewicht und durch niedrigere Werkzeug-Temperaturen bei der Herstellung auszeichnen, wobei eine Erniedrigung der Viskosität der Polykondensatzusammensetzungen durch Additivierung der Polymerschmelze erreicht wird, ohne dabei Verluste bei Eigenschaften wie Schlagzähigkeit und Hydrolysebeständigkeit in Kauf nehmen zu müssen, wie dies beim Einsatz niederviskoser linearer Polymerharze oder bei literaturbekannten Additiven auftritt. Bezüglich Steifigkeit und Reißfestigkeit sollten sich die Zusammensetzungen möglichst nicht signifikant von den nicht additivierten Polykondensatzusammensetzungen unterscheiden, damit ein problemloser Austausch der Materialien für Kunststoffkonstruktionen auf Basis von beispielsweise Polyamid ermöglicht und somit ein optimierter Einsatz in Hybridbauteilen gewährleistet ist.

Die Lösung der Aufgabe und somit Gegenstand der vorliegenden Erfindung sind Leichtbauteile aus einem schalenförmigen Grundkörper dessen Außen- und/oder Innenraum Verstärkungsstrukturen aufweist, welche mit dem Grundkörper fest verbunden sind und die aus angespritzten Thermoplasten bestehen und deren Verbindung mit dem Grundkörper an diskreten Verbindungsstellen erfolgt, dadurch gekennzeichnet, dass Polymer-Formmassen enthaltend
A) 99,99 bis 10 Gew.-Teile, bevorzugt 99,5 bis 40 Gew.-Teile, besonders bevorzugt 99,0 bis 55 Gew.-Teile mindestens eines teilkristallinen thermoplastischen Polymeren und
B) 0,01 bis 50 Gew.-Teile, vorzugsweise 0,25 bis 20 Gew.-Teile, besonders bevorzugt 1,0 bis 15 Gew.-Teile
   mindestens eines Copolymerisats aus mindestens einem Olefin, vorzugsweise einem α-Olefin, mit mindestens einem Methacrylsäureester oder Acrylsäureester eines aliphatischen Alkohols, vorzugsweise eines aliphatischen Alkohols mit 1-30 Kohlenstoffatomen, wobei der MFI des Copolymerisats B1) 100 g/10 min, vorzugsweise 150 g/10 min nicht unterschreitet,
   eingesetzt werden.

In einer bevorzugten Ausführungsform erfolgt die Verbindung des angespitzten Thermoplasten mit dem Grundkörper an diskreten Verbindungsstellen über Durchbrüche im Grundkörper, durch welche der Kunststoff (Thermoplast) hindurch und über die Fläche der Durchbrüche hinausreicht, wodurch ein fester Formschluss erreicht wird. Erfindungsgemäß kann dieser Vorgang in einem, zwei, drei oder mehreren Schritten umgesetzt werden. Der schalenförmige Grundkörper hat bevorzugt eine U-Form, kann aber auch im Falle von Kraftfahrzeugtüren anderer Gestalt sein. Die Ausgestaltung des schalenförmigen Grundkörpers wird aber im Wesentlichen durch die Form des zu produzierenden Formteils bestimmt. Bevorzugt wird ein schalenförmiger Grundkörper aus Metall, insbesondere bevorzugt aus Eisen, Stahl, Messing, Aluminium, Magnesium oder Titan für den erfindungsgemäßen Zweck eingesetzt. Der schalenförmige Grundkörper kann aber auch selber bereits aus einem Thermoplasten bestehen wobei als Thermoplasten dieselben eingesetzt werden können, wie sie für die Komponente A) in der vorliegenden Anmeldung beschrieben werden.

Die Verarbeitung der Polymer-Formmassen zu den erfindungsgemäßen Leichtbauteilen in Hybridbauweise erfolgt durch formgebende Verfahren für Thermoplasten, bevorzugt durch Spritzgießen, Schmelzeextrusion, Pressen, Prägen oder Blasformen. Grundsätzlich zeigen sich die zu erzielenden vorteilhaften Effekte bei Thermoplasten jeglicher Art. Eine Aufzählung der als Komponente A) einzusetzenden Thermoplaste findet sich beispielsweise im Kunststoff-Taschenbuch (Hrsg. Saechtling), Auflage 1989, wo auch Bezugsquellen genannt sind. Verfahren zur Herstellung solcher thermoplastischer Kunststoffe sind dem Fachmann an sich bekannt. Die zu erzielenden Effekte zeigen sich ebenso bei allen aus dem oben zitierten Stand der Technik bekannten Variationen des Einsatzes der Hybridtechnologie, sei es dass der Kunststoffteil das Metallteil vollständig umhüllt, oder wie im Fall der EP 1 380 493 A2 nur umgurtet, sei es dass das Kunststoffteil nachträglich eingeklebt oder mit beispielsweise einem Laser mit dem Metallteil verbunden wird oder Kunststoffteil und Metallteil wie in WO 2004/071741 in einem zusätzlichen Arbeitsschritt den festen Formschluss erhalten.

Bevorzugte als Komponente A) einzusetzende teilkristalline thermoplastische Polymere (Thermoplaste) für die erfindungsgemäßen Leichtbauteile in Hybridtechnik sind ausgewählt aus der Gruppe der Polyamide, vinylaromatischen Polymeren, ASA-, ABS-, SAN-Polymeren, POM, PPE, Polyarylenethersulfone, Polypropylen (PP) oder deren Blends, wobei Polyamid, Polyester, Polypropylen und Polycarbonate oder Blends, enthaltend Polyamid, Polyester oder Polycarbonate als wesentlichen Bestandteil, bevorzugt sind.

Insbesondere bevorzugt werden als Komponente A) in den zu verarbeitenden Formmassen wenigstens ein Polymer der Reihe Polyester, Polycarbonat, Polypropylen oder Polyamid oder Blends dieser Thermoplasten mit den oben genannten Materialien eingesetzt.

Erfindungsgemäß insbsondere bevorzugt als Komponente A) einzusetzende Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können. Als Edukte kommen dafür aliphatische und/oder aromatische Dicarbonsäuren wie Adipinsäure, 2,2,4-und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Erfindungsgemäß bevorzugte Polyamide werden aus Caprolactamen, ganz besonders bevorzugt aus ε-Caprolactam sowie die meisten auf PA6, PA66 und auf anderen aliphatischen und/oder aromatischen Polyamiden bzw. Copolyamiden basierenden Compounds, bei denen auf eine Polyamidgruppe in der Polymerkette 3 bis 11 Methylengruppen kommen, hergestellt.

Erfindungsgemäß als Komponente A) einzusetzende teilkristalline Polyamide können auch im Gemisch mit anderen Polyamiden und/oder weiteren Polymeren eingesetzt werden.

Den Polyamiden können übliche Additive wie z.B. Entformungsmittel, Stabilisatoren und/oder Fließhilfsmittel in der Schmelze zugemischt oder auf der Oberfläche aufgebracht werden.

Erfindungsgemäß ebenfalls als insbesondere bevorzugte Komponente A) einzusetzende Polyester sind Polyester auf Basis von aromatischen Dicarbonsäuren und einer aliphatischen oder aromatischen Dihydroxyverbindung.

Eine erste Gruppe bevorzugter Polyester sind Polyalkylenterephthalate, insbesondere solche mit 2 bis 10 C-Atomen im Alkoholteil.

Derartige Polyalkylenterephthalate sind in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in bekannter Weise hergestellt werden.

Als bevorzugte Dicarbonsäuren sind 2,6-Naphthalindicarbonsäure, Terephthalsäure und Isophthal-säure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butadiol, 1,6-Hexandiol, 1,4-hexandiol, 1,4-Cyclohexandiol, 1,4-Cyclohexandimethanol und Neopentylglykol oder deren Mischungen bevorzugt.

Als insbesondere besonders bevorzugt einzusetzende Polyester der Komponente A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-pentandiol als weitere Monomereinheiten enthalten.

Die Viskositätszahl der erfindungsgemäß als Komponente A) bevorzugt einzusetzenden Polyester liegt im Allgemeinen im Bereich von 50 bis 220, vorzugsweise von 8 bis 160 (gemessen in einer 0,5 gew.-%igen Lösung in einem Phenol/o-Dichlorbenzolgemisch (Gew.-Verh. 1:1 bei 25°C) gemäß ISO 1628.

Insbesondere bevorzugt sind Polyester, deren Carboxyl-Endgruppengehalt bis zu 100 mval/kg, bevorzugt bis zu 50 mval/kg und insbesondere bevorzugt bis zu 40 mval/kg Polyester beträgt. Derartige Polyester können beispielsweise nach dem Verfahren der DE-A 44 01 055 hergestellt werden. Der Carboxyl-Endgruppengehalt wird üblicherweise durch Titrationsverfahren (z.B. Potentiometrie) bestimmt.

Im Falle des Einsatzes von Polyestermischungen als Komponente A) enthalten die Formmassen eine Mischung aus Polyestern, welche verschieden von PBT sind, wie beispielsweise Polyethylenterephthalat (PET). Der Anteil z.B. des Polyethylenterephthalates beträgt vorzugsweise in der Mischung bis zu 50 Gew.%, insbesondere 10 bis 35 Gew.-%, bezogen auf 100 Gew.-% A).

Weiterhin ist es vorteilhaft Rezyklate wie beispielsweise PA-Rezyklate oder PET-Rezyklate (auch scrap-PET genannt) gegebenenfalls in Mischung mit Polyalkylenterephthalaten wie PBT einzusetzten.

Unter Rezyklaten versteht man im Allgemeinen:
1) sogenannte Post Industrial Rezyklate: hierbei handelt es sich um Produktionsabfälle bei der Polykondensation oder bei der Verarbeitung anfallende Angüsse bei der Spritzgussverarbeitung, Anfahrware bei der Spritzgussverarbeitung oder Extrusion oder Randabschnitte von extrudierten Platten oder Folien.
2) Post Consumer Rezyklate: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuniert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise < 0,2 %, insbesondere < 0,05 %.

Als weitere Gruppe für die Komponente A) bevorzugt einzusetzende Polyester sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 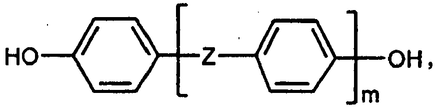 in der
- Z: eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der
- m: den Wert 0 bis 2 hat.

Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seien beispielsweise Dihydroxydiphenyl, Di-(hydroxyphenyl)alkan, Di-(hydroxyphenyl)cycloalkan, Di-(hydroxyphenyl)sulfid, Di-(hydroxyphenyl)ether, Di-(hydroxyphenyl)keton, Di-(hydroxyphenyl)sulfoxid, α,α'-Di-(hydroxyphenyl)-dialkylbenzol, Di-(hydroxyphenyl)sulfon, Di-(hydroxybenzol)benzol, Resorcin und Hydrochinon sowie deren kernalkylierte oder kernhalogenierte Derivate genannt.

Von diesen werden 4,4'-Dihydroxydiphenyl, 2,4-Di-(4'-hydroxyphenyl)-2-methylbutan, α,α'-Di-(4-hydroxyphenyl)-p-diisopropylbenzol, 2,2-Di-(3'-methyl-4'-hydroxyphenyl)propan und 2,2-Di-(3'-chlor-4'-hydroxyphenyl)propan, sowie insbesondere 2,2-Di-(4'-hydroxyphenyl)propan, 2,2-Di-(3',5-dichlordihydroxyphenyl)propan, 1,1-Di-(4'-hydroxyphenyl)cyclohexan, 3,4'-Dihydroxybenzophenon, 4,4'-Dihydroxydiphenylsulfon und 2,2-Di(3',5'-dimethyl4'-hydroxyphenyl)propan oder deren Mischungen bevorzugt.

Selbstverständlich kann man auch Mischungen von Polyalkylenterephthalaten und vollaromatischen Polyestern einsetzten. Diese enthalten im Allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind bekannt und in der Literatur, z.B. in der US-A 3 651 014, beschrieben. Auch im Handel sind entsprechende Produkte erhältlich, z.B. Hytrel^{®} (DuPont).

Als Polyester und somit ebenfalls als Komponente A) bevorzugt einzusetzende Materialien sollen erfindungsgemäß auch halogenfreie Polycarbonate verstanden werden. Geeignete halogenfreie Polcarbonate sind beispielsweise solche auf Basis von Diphenolen der allgemeinen Formel 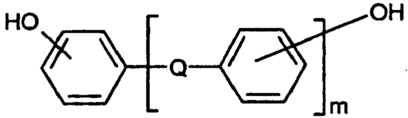 worin
- Q: eine Einfachbindung, eine C₁- bis C₈-Alkylen-, eine C₂- bis C₃-Alkyliden-, eine C₃- bis C₆-Cycloalkylidengruppe, eine C₆- bis C₁₂-Arylengruppe sowie -O-, -S- oder -SO₂- bedeutet und m eine ganze Zahl von 0 bis 2 ist.

Die Diphenole können an den Phenylenresten auch Substituenten wie C₁- bis C₆-Alkyl oder C₁- bis C₆-Alkoxy haben.

Bevorzugte Diphenole der Formel sind beispielsweise Hydrochinon, Resorcin, 4,4'-Dihydroxy-diphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohe-xan.

Sowohl Homopolycarbonate als auch Copolycarbonate sind als Komponente A) geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000 g/mol.

Die Diphenole der allgemeinen Formel sind bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltiger Polycarbonate siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphe-nole oder Dialkylphenole mit insgesamt 8 bis 20 C-Atomen in den Alkylsubstituenten gemäß DE-A 35 06 472, wie p-Nonylphenyl, 3,5-Di-t-Butylphenol, p-t-Octylphenol, p-Dodecylphenol, 2-(3,5-Dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halgoenfreie Polycarbonate im Sinne der vorliegenden Erfindung.

Als weitere bevorzugt geeignete Komponente A) seien amorphe Polyestercarbonate genannt, wobei Phosgen gegen aromatische Dicarbonsäureeinheiten wie Isopshthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Weiterhin kann Bisphenol A durch Bisphenol TMC ersetzt werden. Derartige Polycarbonate sind unter dem Warenzeichen APEC HT^{®} der Firma Bayer AG erhältlich.

Erfindungsgemäß insbesondere bevorzugt ist jedoch der Einsatz der oben beschriebenen Polyamide oder Polyester als Komponente A).

Als Komponente B) können die erfindungsgemäß einzusetzenden Formmassen B1) Copolymerisate, bevorzugt statistische Copolymerisate aus mindestens einem Olefin, bevorzugt α-Olefin und mindestens einem Methacrylsäureester oder Acrylsäureester eines aliphatischen Alkohols, wobei der MFI des Copolymerisats B) 100 g / 10 min, vorzugsweise 150 g / 10 min, besonders bevorzugt 300 g / 10 min nicht unterschreitet, enthalten. In einer bevorzugten Ausführungsform besteht das Copolymerisat B1) zu weniger als 4 Gew.-%, besonders bevorzugt zu weniger als 1,5 Gew.-% und ganz besonders bevorzugt zu 0 Gew.-% aus Monomerbausteinen, die weitere reaktive funktionelle Gruppen ausgewählt aus der Gruppe umfassend Epoxide, Oxetane, Anhydride, Imide, Aziridine, Furane, Säuren, Amine, Oxazoline enthalten.

Geeignete Olefine, bevorzugt α-Olefine, als Bestandteil der Copolymerisate B1) weisen bevorzugt zwischen 2 und 10 Kohlenstoff-Atomen auf und können unsubstituiert oder mit einer oder mehreren aliphatischen, cycloaliphatischen oder aromatischen Gruppen substituiert sein.

Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

Ebenfalls geeignet sind Mischungen der beschriebenen Olefine.

In einer weiter bevorzugten Ausführungsform werden die weiteren reaktiven funktionellen Gruppen des Copolymerisates B1), ausgewählt aus der Gruppe umfassend Epoxide, Oxetane, Anhydride, Imide, Aziridine, Furane, Säuren, Amine, Oxazoline, ausschließlich über die Olefine in das Copolymer B1) eingebracht.

Der Gehalt des Olefins am Copolymerisat B1) liegt zwischen 50 und 90 Gew.-%, bevorzugt zwischen 55 und 75 Gew.-%.

Das Copolymerisat B1) wird weiterhin definiert durch den zweiten Bestandteil neben dem Olefin. Als zweiter Bestandteil sind Alkylester oder Arylalkylester der Acrylsäure oder Methacrylsäure geeignet, deren Alkyl- oder Arylalkylgruppe aus 1-30 Kohlenstoffatomen gebildet wird. Die Alkyl-oder Arylalkylgruppe kann dabei linear oder verzweigt sein sowie cycloaliphatische oder aromatische Gruppen enthalten, daneben auch durch eine oder mehrere Ether- oder Thioetherfunktionen substituiert sein. Geeignete Methacrylsäureester oder Acrylsäureester in diesem Zusammenhang sind auch solche, die aus einer Alkoholkomponente synthetisiert wurden, die auf Oligoethylenglycol oder Oligopropylenglycol mit nur einer Hydroxylgruppe und maximal 30 C-Atomen basieren.

Beispielsweise kann die Alkylgruppe oder Arylalkylgruppe des Methacrylsäureesters oder Acrylsäureesters ausgewählt sein aus der Gruppe umfassend Methyl, Ethyl, n-Propyl, iso-Propy, n-Butyl, iso-Butyl, tert-Butyl, sec-Butyl, 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Bevorzugt sind Alkylgruppem oder Arylalkylgruppen mit 6-20 Kohlenstoffatomen. Bevorzugt sind insbesondere auch verzweigte Alkylgruppen, die im Vergleich zu linearen Alkylgruppen gleicher Anzahl an Kohlenstoffatomen zu einer niedrigeren Glasübergangs-Temperatur T_{G} führen.

Erfindungsgemäß besonders bevorzugt sind Copolymerisate B1), bei denen das Olefin mit Acrylsäure-(2-ethyl)-hexylester copolymerisiert wird. Ebenfalls geeignet sind Mischungen der beschriebenen Acrylsäureester oder Methacrylsäurester.

Bevorzugt ist hierbei die Verwendung von mehr als 60 Gew.-%, besonders bevorzugt mehr als 90 Gew.-% und ganz besonders bevorzugt die Verwendung von 100 Gew.-% Acrylsäure-(2-ethyl)-hexylester bezogen auf die Gesamtmenge an Acrylsäure- und Methacrylsäurester in Copolymerisat B1).

In einer weiter bevorzugten Ausführungsform werden die weiteren reaktiven funktionellen Gruppen ausgewählt aus der Gruppe umfassend Epoxide, Oxetane, Anhydride, Imide, Aziridine, Furane, Säuren, Amine, Oxazoline des Copolymerisates B1) ausschließlich über die Acrylsäure- oder Methacrylsäurester in das Copolymer B1) eingebracht.

Der Gehalt der Acrylsäure- oder Methacrylsäureester am Copolymerisat B1) liegt zwischen 10 und 50 Gew.-%, bevorzugt zwischen 25 und 45 Gew.-%.

Geeignete Copolymerisate B1) zeichnen sich neben der Zusammensetzung durch das niedrige Molekulargewicht aus. Dementsprechend sind für die erfindungsgemäßen Formmassen nur Copolymerisate B1) geeignet, die einen MFI-Wert (Melt Flow Index) gemessen bei 190°C und einer Belastung von 2,16 kg von mindestens 100 g / 10 min, bevorzugt von mindestens 150 g / 10 min, besonders bevorzugt von mindestens 300 g / 10 min aufweisen.

Geeignete Copolymerisate als Komponente B1) können beispielsweise ausgewählt sein aus der Gruppe der von der Fa. Atofina unter dem Markennamen Lotryl^{®} EH angebotenen Materialien, die gewöhnlich als Schmelzkleber Verwendung finden.

In einer bevorzugten Ausführungsform betrifft die vorliegende Erfindung Leichtbauteile aus einem schalenförmigen Grundkörper dessen Außen- oder Innenraum Verstärkungsstrukturen aufweist, welche mit dem Grundkörper fest verbunden sind und die aus angespritzten Thermoplasten bestehen und deren Verbindung mit dem Grundkörper an diskreten Verbindungsstellen erfolgt, dadurch gekennzeichnet, dass Polymer-Formmassen enthaltend
A) 99,99 bis 10 Gew.-Teile, bevorzugt 99,5 bis 40 Gew.-Teile, besonders bevorzugt 99,0 bis 55 Gew.-Teile mindestens eines teilkristallinen thermoplastischen Polymeren, bevorzugt Polyamid oder Polyester, besonders bevorzugt Polyamid und
B1) 0,01 bis 50 Gew.-Teile, vorzugsweise 0,25 bis 20 Gew.-Teile, besonders bevorzugt 1,0 bis 15 Gew.-Teile mindestens eines Copolymerisats aus mindestens einem Olefin, vorzugsweise einem α-Olefin, mit mindestens einem Methacryslsäurester oder Acrylsäureester eines aliphatischen Alkohols, vorzugsweise eines aliphatischen Alkohols mit 1-30 Kohlenstoffatomen, wobei der MFI des Copolymerisats B1) 100 g/10 min, vorzugsweise 150 g/10 min, nicht unterschreitet, eingesetzt werden.
   In einer weiteren bevorzugten Ausführungsform der vorliegenden Erfindung werden für die Leichtbauteile in Hybridbauweise Formmassen eingesetzt, die zusätzlich zu den Komponenten A) und B) noch
C) 0,001 bis 75 Gew.-Teile, vorzugsweise 10 bis 70 Gew.-Teile, besonders bevorzugt 20 bis 65 Gew.-Teile insbesondere bevorzugt 30-65 Gew.-Teile eines Füll- oder Verstärkungsstoffes enthalten.

Als Füllstoff oder Verstärkungsstoff können auch Mischungen aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstär-kungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern, insbesondere besonders bevorzugt Glasfasern, eingesetzt.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, insbesondere Talk, Wollastonit oder Kaolin.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei klei-ner 20 µm, besonders bevorzugt bei kleiner 15 µm, insbesondere bevorzugt bei kleiner 10 µm, bestimmt mit einem CILAS GRANULOMETER.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Diese Vorbehandlung ist jedoch nicht unbedingt erforderlich. Insbesondere bei Verwendung von Glasfasern können aber zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind Silanverbindungen, bevorzugt Silanverbindungen der allgemeine Formel (VIII)

(X-(CH₂)_{q})ₖ-Si-(O-CᵣH₂ᵣ₊₁)₄₋ₖ (VIII)

worin
- X: für NH₂-, HO- oder 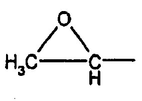 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Ferner bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können, bedingt durch die Verarbeitung zur Formmasse bzw. Formkörper, in der Formmasse bzw. im Formkörper kürzere Längenverteilungen als ursprünglich eingesetzt aufweisen.

In einer alternativen bevorzugten Ausführungsform können die für die Herstellung der erfindungsgemäßen Leichtbauteile auf Hybridbasis einzusetzenden Polymer-Formmassen zusätzlich zu den Komponenten A) und B) und C) oder anstelle von C) noch gegebenenfalls
D) 0,001 bis 30 Gew.-Teile, vorzugsweise 5 bis 25 Gew.-Teile, besonders bevorzugt 9 bis 19 Gew.-Teile mindestens eines Flammschutzadditivs enthalten.

Als Flammschutzadditiv oder Flammschutzmittel D) können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122(= CA 210 9024 A1)) können eingesetzt werden. Ebenso kommen Salze aliphatischer oder aromatischer Sulfonsäuren in Frage. Als halogenhaltige, insbesondere bromierte und chlorierte Verbindungen seien beispielhaft genannt: Ethylen-1,2-bistetrabromphthalimid, epoxidiertes Tetrabrombisphenol-A-Harz, Tetrabrombisphenol-A-oligocarbonat, Tetrachlor-bisphenol-A-oligocarbonat, Pentabrompolyacrylat, bromiertes Polystyrol und Decabromdiphenylether. Als organische Phosphorverbindungen sind z.B. die Phosphorverbindungen gemäß WO-A 98/17720 (=US 6 538 024) geeignet, wie z.B. Triphenylphosphat (TPP), Resorcinol-bis-(diphenylphosphat) (RDP) und die daraus abgeleiteten Oligomere sowie Bisphenol-A-bis-diphenylphosphat (BDP) und die daraus abgeleiteten Oligomere, ferner organische und anorganische Phosphonsäurederivate und deren Salze, organische und anorganische Phosphinsäurederivate und deren Salze, insbesondere Metalldialkylphosphinate wie z.B. Aluminium-tris[dialkylphosphinate] oder Zink-bis[dialkylphosphinate], außerdem roter Phosphor, Phosphite, Hypophosphite, Phospinoxide, Phosphazene, Melaminpyrophosphat und deren Mischungen. Als Stickstoffverbindungen kommen solche aus der Gruppe der Allantoin-, Cyanursäure-, Dicyandiamid, Glycouril-, Guanidin- Ammonium- und Melaminderivate, bevorzugt Allantoin, Benzoguanamin, Glykouril, Melamin, Kondensationsprodukte des Melamins z.B. Melem, Melam oder Melom bzw. höher kondensierte Verbindungen dieses Typs und Addukte des Melamins mit Säuren wie z.B. mit Cyanursäure (Melamincyanurat), Phosphorsäure (Melaminphosphat) oder kondensierten Phosphorsäuren (z.B. Melaminpolyphosphat) in Frage. Als Synergisten sind z.B. Antimonverbindungen, insbesondere Antimontrioxid, Natriumantimonat und Antimonpentoxid, Zinkverbindungen wie z.B. Zinkborat, Zinkoxid, Zinkphosphat und Zinksulfid, Zinnverbindungen wie z.B. Zinnstannat und Zinnborat sowie Magnesiumverbindungen wie z.B. Magnesiumoxid, Magnesiumcarbonat und Magensiumborat geeignet. Auch können dem Flammschutzmittel sogenannte Kohlenstoffbildner wie z.B. Phenol-Formaldehydharze, Polycarbonate, Polyphenylether, Polyimide, Polysulfone, Polyethersulfone, Polyphenylosulfide und Polyetherketone sowie Antitropfmittel wie Tetrafluorethylenpolymerisate zugesetzt werden.

In einer weiteren alternativen bevorzugten Ausführungsform können die zur Herstellung der erfindungsgemäßen Leichtbauteile auf Hybridbasis einzusetztenden Polymer-Formmassen zusätzlich zu den Komponenten A) und B) und C) und/oder D) oder anstelle von C) und/oder D) noch gegebenenfalls
E) 0,001 bis 80 Gew.-Teile, besonders bevorzugt 2 bis 19 Gew.-Teile, insbesondere bevorzugt 9 bis 15 Gew.-Teile mindestens eines Elastomermodifikators enthalten.

Die als Komponente E) einzusetzenden Elastomermodifikatoren umfassen ein oder mehrere Pfropfpolymerisate von
E.1 5 bis 95 Gew.-%, vorzugsweise 30 bis 90 Gew.-%, wenigstens eines Vinylmonomeren auf
E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage E.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere E.1 sind vorzugsweise Gemische aus
E.1.1 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacryl-säure-(C₁-C₈)-Alkylester (wie z.B. Methylmethacrylat, Ethylmethacrylat) und
E.1.2 1 bis 50 Gew.-% Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacry-lat, t-Butylacrylat) und/oder Derivate (wie Anhydride und Imide) ungesättigter Carbonsäu-ren (beispielsweise Maleinsäureanhydrid und N-Phenyl-Maleinimid).

Bevorzugte Monomere E.1.1 sind ausgewählt aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren E) einzusetzenden Pfropfpolymerisate geeignete Pfropf-grundlagen E.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt bevorzugt mindestens 30 Gew.-%, besonders bevorzugt mindestens 40 Gew.-% (in Toluol gemessen).

Die Elastomermodifikatoren bzw. Pfropfpolymerisate E) werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E) auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Pfropfgrundlagen E2, die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacry-lat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und Ester ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin oder Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens drei ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren als Komponente E) eingesetzt werden, die Glasübergangstemperaturen < 10°C, vorzugsweise < 0°C, besonders bevorzugt < -20°C aufweisen. Hierzu können z.B. Elastomere mit einer Blockcopolymerstruktur gehören. Hierzu können weiterhin z.B. thermoplastisch aufschmelzbare Elastomere gehören. Beispielhaft und bevorzugt sind hier EPM-, EPDM- und/oder SEBS-Kautschuke genannt.

In einer weiteren alternativen bevorzugten Ausführungsform können die für die Herstellung der erfindungsgemäßen Leichtbauteile auf Hybrid-Basis einzusetzenden Polymer-Formmassen zusätzlich zu den Komponenten A) und B) und C) und/oder D) und/oder E) oder anstelle von C), D) oder E) noch gegebenenfalls

### F) 0,001 bis 10 Gew.-Teile, bevorzugt 0,05 bis 3 Gew.-Teile, besonders bevorzugt 0,1 bis 0,9 Gew.-Teile weitere übliche Additive enthalten.

Übliche Additive im Sinne der vorliegenden Erfindung sind z.B. Stabilisatoren (zum Beispiel UV-Stabilisatoren, Thermostabilisatoren, Gammastrahlenstabilisatoren), Antistatika, Fließhilfsmittel, Entformungsmittel, weitere Brandschutzadditive, Emulgatoren, Nukleierungsmittel, Weichmacher, Gleitmittel, Farbstoffe, Pigmente und Additive zur Erhöhung der elektrischen Leitfähigkeit. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren werden bevorzugt sterisch gehinderte Phenole, Hydrochinone, aromatische sekundäre Amine wie z.B. Diphenylamine, substituierte Resorcine, Salicylate, Benzotriazole und Benzophenone, sowie verschiedene substituierte Vertreter dieser Gruppen und deren Mischungen eingesetzt.

Als Pigmente bzw. Farbstoffe werden bevorzugt Titandioxid, Zinksulfid, Ultramarinblau, Eisenoxid, Ruß, Phthalocyanine, Chinacridone, Perylene, Nigrosin und Anthrachinone eingesetzt.

Als Nukleierungsmittel werden bevorzugt Natrium- oder Calciumphenylphosphinat, Aluminiumoxid, Siliziumdioxid sowie Talkum, besonders bevorzugt Talkum eingesetzt.

Als Gleit- und Entformungsmittel werden bevorzugt Esterwachse, Pentaerytritoltetrastearat (PETS), langkettige Fettsäuren (z.B. Stearinsäure oder Behensäure)oder Fettsäureester, deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polymethylen- bzw. Polypropylenwachse eingesetzt.

Als Weichmacher werden bevorzugt Phthalsäuredioctylester, Phthalsäuredibenzylester, Phthal-säurebutylbenzylester, Kohlenwasserstofföle, N-(n-Butyl)benzolsulfonamid eingesetzt.

Als Additive zur Erhöhung der elektrischen Leitfähigkeit werden bevorzugt Ruße, Leitfähigkeitsruße, Carbonfibrillen, nanoskalige Graphitfasern oder Kohlenstofffasern, Graphit, leitfähige Polymere, Metallfasern sowie andere übliche Additive zur Erhöhung der elektrischen Leitfähigkeit zugesetzt. Als nanoskalige Fasern können bevorzugt sogenannte "single wall Kohlenstoff-Nanotubes" oder "multi wall Kohlenstoff-Nanotubes" (z.B. der Firma Hyperion Catalysis) eingesetzt werden.

In einer weiteren alternativen bevorzugten Ausführungsform können die Polyamid-Formmassen zusätzlich zu den Komponenten A) und B) und C), und/oder D), und/oder E), und/oder F) oder anstelle von C), D), E) oder F) noch gegebenenfalls
G) 0,5 bis 30 Gew.-Teile, bevorzugt 1 bis 20 Gew.-Teile, besonders bevorzugt 2 bis 10 Gew.-Teile und höchst bevorzugt 3 bis 7 Gew.-Teile Verträglichkeitsvermittler (Compatibilizer / Kompatibilisator) enthalten.

Als Verträglichkeitsvermittler werden vorzugsweise thermoplastische Polymere mit polaren Gruppen eingesetzt.

Erfindungsgemäß können demgemäß Polymere zum Einsatz kommen, die
G.1 ein vinylaromatisches Monomer,
G.2 wenigstens ein Monomer ausgewählt aus der Gruppe C₂ bis C₁₂-Alkylmethacrylate, C₂ bis C₁₂-Alkylacrylate, Methacrylnitrile und Acrylnitrile und
G.3 α,β-ungesättigte Komponenten enthaltend Dicarbonsäureanhydride enthalten.

Vorzugsweise werden als Komponente G.1, G.2 und G.3 Terpolymere der genannten Monomeren eingesetzt. Demgemäß kommen vorzugsweise Terpolymere von Styrol, Acrylnitril und Maleinsäureanhydrid zum Einsatz. Diese Terpolymere tragen insbesondere zur Verbesserung der mechanischen Eigenschaften, wie Zugfestigkeit und Reißdehnung bei. Die Menge an Maleinsäureanhydrid in dem Terpolymer kann in weiten Grenzen schwanken. Vorzugsweise beträgt die Menge 0,2 bis 5 Mol-%. Besonders bevorzugt sind Mengen zwischen 0,5 und 1,5 Mol-%. In diesem Bereich werden besonders gute mechanische Eigenschaften bezüglich Zugfestigkeit und Reißdehnung erzielt.

Das Terpolymer auf bekannte Weise hergestellt werden. Eine geeignete Methode ist das Lösen von Monomerkomponenten des Terpolymers, z. B. des Styrols, Maleinsäureanhydrids oder Acrylnitrils in einem geeigneten Lösemittel, z. B. Methylethylketon (MEK). Zu dieser Lösung werden ein oder gegebenenfalls mehrere chemische Initiatoren hinzugesetzt. Bevorzugte Initiatoren sind Peroxide. Sodann wird das Gemisch für mehrere Stunden bei erhöhten Temperaturen polymerisiert. Anschließend werden das Lösemittel und die nicht umgesetzten Monomere in bekannter Weise entfernt.

Das Verhältnis zwischen der Komponente G.1 (vinylaromatisches Monomer) und der Komponente G.2, z.B. dem Acrylnitrilmonomer in dem Terpolymer liegt vorzugsweise zwischen 80:20 und 50:50.

Als vinylaromatisches Monomer G.1 ist Styrol besonders bevorzugt. Für die Komponente G.2 ist besonders bevorzugt Acrylnitril geeignet. Als Komponente G.3 ist besonders bevorzugt Maleinsäureanhydrid geeignet.

Beispiele für erfindungsgemäß einsetzbare Verträglichkeitsvermittler G) sind in den EP-A 0 785 234 (= US 5 756 576) und EP-A 0 202 214 (= US 4 713 415) beschrieben. Erfindungsgemäß bevorzugt sind insbesondere die in der EP-A 0 785 234 genannten Polymere.

Die Verträglichkeitsvermittler können in Komponente G) allein oder in beliebiger Mischung untereinander enthalten sein.

Eine weitere, als Verträglichkeitsvermittler besonders bevorzugte Substanz ist ein Terpolymer von Styrol und Acrylnitril im Gewichtsverhältnis 2,1:1 enthaltend 1 Mol-% Maleinsäureanhydrid.

Komponente G) wird insbesondere dann eingesetzt, wenn die Formmasse Pfropfpolymerisate, wie unter E) beschrieben, enthält.

Erfindungsgemäß ergeben sich folgende bevorzugte Kombinationen der Komponenten in Polymer-Formmassen zwecks Einsatz in Leichtbauteilen auf Hybridbasis:
A,B; A,B,C; A,B,D; A,B,E; A,B,F; A,B,G; A,B,C,D; A,B,C,E; A,B,C,F; A,B,C,G; A,B,D,E; A,B,D,F; A,B,D,G; A,B,E,F; A,B,E,G; A,B,F,G; A,B,C,D,E; A,B,C,D,G; A,B,C,F,G; A,B,E,F,G; A,B,D,F,G; A,B,C,D,E,F; A,B,C,D,E,G; A,B,D,E,F,G; A,B,C,E,F,G; A,B,C,D,E,G; A,B,C,D,E,F,G.

Die aus den eingesetzten Polymer-Formmassen erfindungsgemäß herzustellenden Leichtbauteile auf Hybridbasis zeichnen sich durch eine höhere Schlagzähigkeit aus als Formteile oder Formkörper aus Formmassen vergleichbarer Schmelzviskosität, die durch Einsatz eines niedrigerviskosen Polymers als Komponente A) hergestellt werden. Aufgrund des ungewöhnlich hohen Elastizitätsmoduls von rund 19 000 MPa bei Raumtemperatur im Falle des Einsatzes von Polyamid als Komponente A) in Kombination beispielsweise mit einer Komponente B1) lässt sich der Gehalt an Glasfasern von 30 Gew.-% auf 60 Gew.-% verdoppeln, was zu einer doppelt so hohen Steifigkeit eines daraus hergestellten Leichtbauteils auf Hybridbasis führt. Die Dichte der Polymer-Formmasse erhöht sich dabei überraschenderweise lediglich um ca. 15-20%. Dies erlaubt die deutliche Reduktion der Wanddicken der Bauteilkomponenten bei gleicher mechanischer Performance mit deutlich reduzierten Fertigungskosten. KFZ-Frontends, eine Standard-Anwendung der Hybridtechnik, können somit leichter und oder steifer konstruiert werden, was mit einer Gewichts- und Fertigungskostenreduktion von 30-40 % einhergeht.

Ein höheres Kraftniveau bedeutet zugleich, dass das Frontend in Hybridbauweise im Falle eines Crashs mehr Energie aufnehmen kann.

Erfindungsgemäß mit Fließverbesserer B) herzustellende Leichtbauteile auf Hybridbasis aus einem schalenförmigen Grundkörper, dessen Außen- oder Innenraum Verstärkungsstrukturen, bevorzugt in Rippenform, aufweist, welche mit dem Grundkörper fest verbunden sind und die aus angespritztem Thermoplasten bestehen und deren Verbindung mit dem Grundkörper an diskreten Verbindungsstellen über Durchbrüche im Grundkörper erfolgt, sind daher in folgenden Bereichen einsetzbar:
Fahrzeugteile (automotive Bereich), in tragenden Teilen von Büromaschinen, Haushaltsmaschinen oder andere Maschinen, in Konstruktionselementen für Dekorationszwecke, Treppenstufen, Fahrtreppenstufen oder Kanaldeckeln.

Bevorzugt erfolgt ihr Einsatz in Kraftfahrzeugen als komplette Frontends, Fußgängerschutz Beam, reine Schlossbrücken für Motorhauben oder Kofferraumdeckel, Dachspriegel vorne, Dachspriegel hinten, Dachrahmen, Dachmodule (gesamtes Dach), Schiebedach-Trägerteile, Armaturentafelträgerteile (Cross Car Beam), Lenkstockhalter, Feuerwand, Pedale, Pedalblöcke, Schaltblöcke von Getrieben, A-, B-, C-Säulen, B-Säulenmodule, Längsträger, Knotenelemente zum Verbinden von Längsträgern und B-Säulen, Knotenelemente zum Verbinden von A-Säule und Querträger, Knotenelemente zum Verbinden von A-Säule, Querträger und Längsträger, Querträgern, Kotflügelbänke, Kotflügelmodule, Crash Boxen, Rear Ends, Reserveradmulden, Motorhauben, Motorabdeckungen, Wasserkastenbank, Motorversteifungen (Versteifung Vorderwagen), Fahrzeugboden, Bodenversteifungen, Sitzversteifung, Bodenversteifungen, Sitzquerträger, Heckklappen, Fahrzeugrahmen, Sitzstrukturen, Rückenlehnen, Sitzschalen, Rücksitzlehnen mit und ohne Gurtintegration, Hutablagen, Sitzquerträger, Ventildeckel, Lagerschilde für Lichtmaschinen oder Elektromotoren, komplette Fahrzeugtürstrukturen, Seitenaufprallträger, Modulträger, Ölwannen, Getriebeölwannen, Ölmodule, Scheinwerferrahmen, Schweller, Schwellerverstärkungen, Fahrwerkskomponenten sowie Motorrollerrahmen.

Bevorzugter Einsatz der erfindungsgemäßen Leichtbauteile in Hybridbauweise im non automotive Bereich, ist in E/E Geräten, Haushaltsgeräten, Möbeln, Heizthermen, Einkaufswagen, Regale, Treppenstufen, Fahrtreppenstufen, Kanaldeckeln.

Selbstverständlich eignen sich die erfindungsgemäßen Leichtbauteile auf Hybridbasis aber auch zum Einsatz in Bahnfahrzeugen, Flugzeugen, Schiffen, Schlitten, Motorrollern oder sonstigen Fortbewegungsmitteln, wo es auf leichte jedoch stabile Konstruktionen ankommt.

Gegenstand der vorliegenden Erfindung ist aber auch ein Verfahren zur Herstellung eines Leichtbauteils in Hybridform, dessen Außen- und/oder Innenraum Verstärkungsstrukturen aufweist, welche mit dem Grundkörper fest verbunden sind und die aus angespritztem Thermoplasten bestehen und deren Verbindung mit dem Grundkörper an diskreten Verbindungsstellen über Durchbrüche im Grundkörper erfolgt, dadurch gekennzeichnet, dass man Polymer-Formmassen enthaltend
A) 99,99 bis 10 Gew.-Teile, bevorzugt 99,5 bis 40 Gew.-Teile, besonders bevorzugt 99,0 bis 55 Gew.-Teile mindestens eines teilkristallinen thermoplastischen Polymeren und
B) 0,01 bis 50 Gew.-Teile, vorzugsweise 0,25 bis 20 Gew.-Teile, besonders bevorzugt 1,0 bis 15 Gew.-Teile
   mindestens eines Copolymerisats aus mindestens einem Olefin, vorzugsweise einem α-Olefin, mit mindestens einem Methacrylsäureester oder Acrylsäureester eines aliphatischen Alkohols, vorzugsweise eines aliphatischen Alkohols mit 3-50 Kohlenstoffatomen, wobei der MFI des Copolymerisats B1) 100 g/10 min, vorzugsweise 150 g/10 min nicht unterschreitet
   durch formgebende Verfahren, bevorzugt durch Spritzgießen, Schmelzeextrusion, Pressen, Prägen oder Blasformen, in einem formgebenden Werkzeug verarbeitet.

Gegenstand der vorliegenden Erfindung ist aber auch ein Verfahren zur Reduktion des Gewichts von Bauteilen, bevorzugt von Fahrzeugen aller Art, dadurch gekennzeichnet, dass man Leichtbauteile aus einem schalenförmigen Grundkörper, deren Außen- und/oder Innenraum Verstärkungsstrukturen aufweisen, welche mit dem Grundkörper fest verbunden sind und die aus angespritztem Thermoplasten bestehen und deren Verbindung mit dem Grundkörper an diskreten Verbindungsstellen erfolgt einsetzt, wobei die Thermoplasten aus Polymer-Formmassen enthaltend
A) 99,99 bis 10 Gew.-Teile, bevorzugt 99,5 bis 40 Gew.-Teile, besonders bevorzugt 99,0 bis 55 Gew.-Teile mindestens eines teilkristallinen thermoplastischen Polymeren und
B) 0,01 bis 50 Gew.-Teile, vorzugsweise 0,25 bis 20 Gew.-Teile, besonders bevorzugt 1,0 bis 15 Gew.-Teile
   mindestens eines Copolymerisats aus mindestens einem Olefin, vorzugsweise einem α-Olefin, mit mindestens einem Methacrylsäureester oder Acrylsäureester eines aliphatischen Alkohols, vorzugsweise eines aliphatischen Alkohols mit 3-50 Kohlenstoffatomen, wobei der MFI des Copolymerisats B1) 100 g/10 min, vorzugsweise 150 g/10 min nicht unterschreitet,
hergestellt werden.

Fest verbunden im Sinne der vorliegenden Erfindung bedeutet, dass das extrudierte Polymer beispielsweise durch Öffnungen im Grundkörper gepresst wird und auf der Gegenseite der Öffnung über deren Kanten hinaus fließt um beim Erstarren einen festen Formschluss zu ergeben. In einer bevorzugten Ausführungsform erfolgt wie bereits oben beschrieben die Verbindung des angespitzten Thermoplasten mit dem Grundkörper an diskreten Verbindungsstellen über Durchbrüche im Grundkörper, durch welche der Kunststoff (Thermoplast) hindurch und über die Fläche der Durchbrüche hinausreicht, wodurch ein besonders fester Formschluss erreicht wird. Dies kann aber auch in einem zusätzlichen Arbeitsschritt erfolgen indem über Öffnungen hinausragende Grate nochmals mit einem Werkzeug derart bearbeitet werden, dass ein fester Formschluss entsteht. Auch das nachträgliche Einkleben mit Klebemitteln oder mit einem Laser wird unter dem Begriff "fest verbunden" verstanden. Der feste Formschluss kann aber auch durch Umfließen (Umgurten) des Grundkörpers erfolgen.

Gegenstand der vorliegenden Erfindung sind aber auch Fahrzeuge oder sonstige Fortbewegungsmittel, besonders Kraftfahrzeuge, Bahnfahrzeuge, Flugzeug, Schiffe, Schlitten oder Motorroller, enthaltend ein Leichtbauteil in Hybridform, dessen Außen- und/oder Innenraum Verstärkungsstrukturen aufweist, welche mit dem Grundkörper fest verbunden sind und die aus angespritztem Thermoplasten bestehen und deren Verbindung mit dem Grundkörper an diskreten Verbindungsstellen erfolgt, dadurch gekennzeichnet, dass man Polymer-Formmassen enthaltend
A) 99,99 bis 10 Gew.-Teile, bevorzugt 99,5 bis 40 Gew.-Teile, besonders bevorzugt 99,0 bis 55 Gew.-Teile mindestens eines teilkristallinen thermoplastischen Polymeren und
B) 0,01 bis 50 Gew.-Teile, vorzugsweise 0,25 bis 20 Gew.-Teile, besonders bevorzugt 1,0 bis 15 Gew.-Teile
   mindestens eines Copolymerisats aus mindestens einem Olefin, vorzugsweise einem α-Olefin, mit mindestens einem Methacrylsäureester oder Acrylsäureester eines aliphatischen Alkohols, vorzugsweise eines aliphatischen Alkohols mit 3-50 Kohlenstoffatomen, wobei der MFI des Copolymerisats B1) 100 g/10 min, vorzugsweise 150 g/10 min nicht unterschreitet.
einsetzt und in diese im Fahrzeug verbaut.

### Beispiele

Anhand verschiedener auf Polyamid (= Komponente A) basierender Produkte der Lanxess Deutschland GmbH wird die technische Überlegenheit der erfindungsgemäßen Leichtbauteile auf Hybridbasis demonstriert:
Durethan^{®} BKV 30 ist eine Formmasse auf Basis von Polyamid ohne die erfindungsgemäß einzusetzenden Bestandteile B1), B2) oder B3).
Durethan^{®} BKV 30 XF ist eine Formmasse auf Basis von Polyamid und der Komponente B1).

### Beispiel 1

Verhältnis Fließweg/Wanddicke (Fließlänge in mm) zur Herstellung eines erfindungsgemäßen Hybridbauteils bei einer Schmelzetemperatur von 280°C, einer Werkzeugtemperatur von 80°C und einem Fülldruck von 650 bar

| Wanddicke [mm] | 1 | 2 | 3 | 4 |
|---|---|---|---|---|
| BKV 30 | 90 | 230 | 485 | 760 |
| BKV 30XF | 150 | 405 | 790 | 1250 |

Die Tabelle zeigt, dass Durethan^{®} BKV 30 XF deutlich gegenüber einem herkömmlichen Produkt fließverbessert ist. Die Zahlen geben die Fließlänge im Werkzeug in mm an. Durethan^{®} BKV 30 XF eignet sich folglich hervorragend zur Herstellung von Hydridbauteilen.

### Beispiel 2

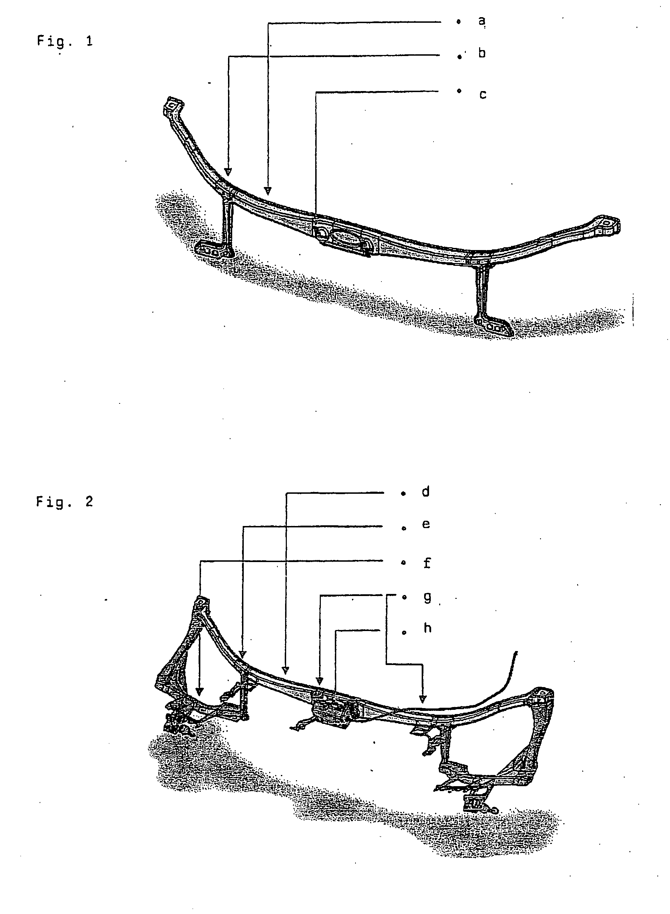

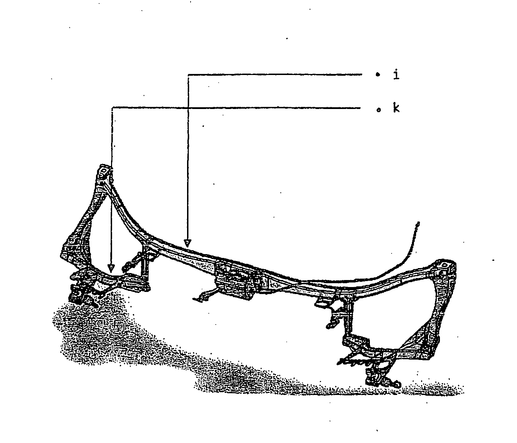

Gewichtseinsparung in Gramm an einem KFZ-Frontendträger in Hybridbauweise gemäß Fig. 1 ohne Verlust der Stabilitätseigenschaften.

In Fig. 1 sowie in der Tabelle stehen
a = Hybrid Obergurt
b = Hybrid Vertikalstreben
c = Schweißmutternträger

| | Stahlblech im Hybridbauteil gemäß Stand der Technik | Stahlblech im Hybridbauteil erfindungsgemäß hergestellt aus einer fließverbesserten Polyamidformmasse |
|---|---|---|
| a | 850 | 763 |
| b | 260 | 190 |
| c | 400 | 200 |
| Gesamtgewicht Stahlblech | 1510 | 1153 |

Einsparung am KFZ-Frontendträger durch Einsatz einer fließverbesserten Polyamidformmasse auf Basis von Lotryl^{®}EH als B1) : 357 g

### Beispiel 3

Gewichtseinsparung in Gramm an einem KFZ-Frontendträger in Hybridbauweise gemäß Fig. 2.

In Fig. 2 sowie in der Tabelle stehen
d = Hybrid Obergurt, Rippen und Umspritzung
e = Hybrid Vertikalstreben, Rippen und Umspritzung
f = Scheinwerferrahmen
g = Aufnahmen
h = Diebstahlschutz

| | Kunststoffanteil im Hybridbauteil gemäß Stand der Technik | Kunststoffanteil im Hybridbauteil erfindungsgemäß |
|---|---|---|
| d | 840 | 440 |
| e | 270 | 46 |
| f | 1240 | 667 |
| g | 530 | 400 |
| h | - | 70 |
| Gesamtgewicht Kunststoff | 2880 | 1553 |
| Einsparung: | 1327 g Gewicht | |

Die Tabelle zeigt, dass die Leichtigkeit eines unter Einsatz erfindungsgemäßer Fließverbesserer hergestellten Frontends zu deutlichen Gewichtsreduktionen führt und somit zusätzliche Applikationen wie Diebstahlschutz ermöglicht ohne dass die Stabilität des Bauteils und somit die Sicherheit des Kraftfahrzeugs leidet. Leichteres Gewicht von Bauteilen ermöglicht somit Kraftstoffeinsparungen beim Betrieb des Kraftfahrzeugs und einen ökonomischen Umgang mit den Resourcen.

### Beispiel 4

Gewichtseinsparung in Gramm an einem KFZ-Frontendträger in Hybridbauweise gemäß Fig. 3 ohne Verlust der Stabilitäseigenschaften

In Fig. 3 sowie in der Tabelle bedeuten
i = Stahlbleche
k = Kunststoffstruktur

| | Hybridbauteil gemäß Stand der Technik | Hybridbauteil erfindungsgemäß |
|---|---|---|
| i | 1510 | 1153 |
| k | 2880 | 1553 |
| Gesamtgewicht | 4390 | 2706 |
| Einsparung: | 1684 g Gewicht | |

Auch diese Tabelle zeigt eindrucksvoll die Gewichtseinsparung eines erfindungsgemäßen, unter Einsatz von Lotryl^{®}EH hergestellten Hybrid Frontendträgers auf Basis von Polyamid gegenüber einem entsprechenden Frontendträger hergestellt aus Formmassen ohne Fließhilfsmittel gemäß Komponente B.

## Patentansprüche

1. Leichtbauteile aus einem schalenförmigen Grundkörper dessen Außen- und/oder Innenraum Verstärkungsstrukturen aufweist, welche mit dem Grundkörper fest verbunden sind und die aus angespritzten Thermoplasten bestehen und deren Verbindung mit dem Grundkörper an diskreten Verbindungsstellen erfolgt, **dadurch gekennzeichnet, dass** Polymer-Formmassen enthaltend
A)
99,99 bis 10 Gew.-Teile, bevorzugt 99,5 bis 40 Gew.-Teile, besonders bevorzugt
99,0 bis 55 Gew.-Teile mindestens eines teilkristallinen thermoplastischen Polymeren und
B) 0,01 bis 50 Gew.-Teile, vorzugsweise 0,25 bis 20 Gew.-Teile, besonders bevorzugt 1,0 bis 15 Gew.-Teile
mindestens eines Copolymerisats aus mindestens einem Olefin, vorzugsweise einem α-Olefin, mit mindestens einem Methacryslsäurester oder Acrylsäureester eines aliphatischen Alkohols, vorzugsweise eines aliphatischen Alkohols mit 1-30 Kohlenstoffatomen, wobei der MFI des Copolymerisats B1) 100 g/10 min, vorzugsweise 150 g/10 min nicht unterschreitet, eingesetzt werden.

2. Leichtbauteile gemäß Anspruch 1, **dadurch gekennzeichnet, dass** die Verbindung des angespitzten Thermoplasten mit dem Grundkörper an diskreten Verbindungsstellen über Durchbrüche im Grundkörper, durch welche der Thermoplast hindurch und über die Fläche der Durchbrüche hinausreicht.

3. Leichtbauteile gemäß Anspruch 1 oder 2, **dadurch gekennzeichnet, dass** Thermoplasten ausgewählt aus der Gruppe der Polyamide, vinylaromatischen Polymeren, ASA-, ABS-, SAN-Polymeren, POM, PPE, Polypropylen oder Polyarylenethersulfone oder deren Blends, bevorzugt Polyamide, Polyester, Polypropylen, Polycarbonate oder deren Blends, insbesondere bevorzugt Polyamide oder die Blends der oben genannten Materialien mit Polyamid eingesetzt wurden.

4. Leichtbauteile gemäß der Ansprüche 1 bis 3, **dadurch gekennzeichnet, dass** zu ihrer Herstellung Formmassen eingesetzt werden, die zusätzlich zu den Komponenten A) und B) noch
C) 0,001 bis75 Gew.-Teile, vorzugsweise 10 bis 70 Gew.-Teile, besonders bevorzugt 20 bis 65 Gew.-Teile insbesondere bevorzugt 30-65 Gew.-Teile eines Füll- oder Verstärkungsstoffes enthalten.

5. Leichtbauteile gemäß Anspruch 4, **dadurch gekennzeichnet, dass** als Füll- oder Verstärkungsstoff Glasfasern eingesetzt werden.

6. Verfahren zur Herstellung eines Leichtbauteils in Hybridform, dessen Außen- und/oder Innenraum Verstärkungsstrukturen aufweist, welche mit dem Grundkörper fest verbunden sind und die aus angespritztem Thermoplasten bestehen und deren Verbindung mit dem Grundkörper an diskreten Verbindungsstellen erfolgt, **dadurch gekennzeichnet, dass** man Polymer-Formmassen enthaltend
A) 99,99 bis 10 Gew.-Teile, bevorzugt 99,5 bis 40 Gew.-Teile, besonders bevorzugt 99,0 bis 55 Gew.-Teile mindestens eines teilkristallinen thermoplastischen Polymeren und
B) 0,01 bis 50 Gew.-Teile, vorzugsweise 0,25 bis 20 Gew.-Teile, besonders bevorzugt 1,0 bis 15 Gew.-Teile
mindestens eines Copolymerisats aus mindestens einem Olefin, vorzugsweise einem α-Olefin, mit mindestens einem Methacrylsäureester oder Acrylsäureester eines aliphatischen Alkohols, vorzugsweise eines aliphatischen Alkohols mit 3-50 Kohlenstoffatomen, wobei der MFI des Copolymerisats B1) 100 g/10 min, vorzugsweise 150 g/10 min nicht unterschreitet
durch formgebende Verfahren in einem formgebenden Werkzeug verarbeitet.

7. Verwendung der Leichtbauteile gemäß der Ansprüche 1 bis 5 im automotive Bereich und im non-automotive Bereich, bevorzugt in Kraftfahrzeugen, Bahnfahrzeugen, Flugzeugen, Schiffen, Schlitten oder sonstigen Fortbewegungsmitteln, in E/E Geräten, Haushaltsgeräten, Möbeln, Heizthermen, Motorrollern, Einkaufswagen, Regalen, Treppenstufen, Fahrtreppenstufen, Kanaldeckeln.

8. Verwendung der Leichtbauteile gemäß Anspruch 7, **dadurch gekennzeichnet, dass** in Kraftfahrzeugen diese für komplette Frontends, Scheinwerferrahmen, Fußgängerschutz Beam, reine Schlossbrücken für Motorhauben oder Kofferraumdeckel, Dachspriegel vorne, Dachspriegel hinten, Dachrahmen, Dachmodule (gesamtes Dach), Schiebedach-Trägerteile, Armaturentafelträgerteile (Cross Car Beam), Lenkstockhalter, Feuerwand, Pedale, Pedalblöcke, Schaltblöcke von Getrieben, A-, B-, C-Säulen, B-Säulenmodule, Längsträger, Knotenelemente zum Verbinden von Längsträgernund B-Säulen, Querträgern Kotflügelbänke, Kotflügelmodule, Crash Boxen, Rear Ends, Reserveradmulden, Motorhauben, Motorabdeckungen, Motor-Ölwannen, Gertiebeölwannen, Ölmodule, Wasserkastenbank, Motorversteifungen (Versteifung Vorderwagen), Fahrwerkskomponenten, Fahrzeugboden, Schwellern, Schwellerverstärkungen, Bodenversteifungen, Sitzversteifung, Sitzquerträgern Heckklappen, Rahmen, Sitzstrukturen, Rückenlehnen, Sitzschalen, Rücksitzlehnen mit und ohne Gurtintegration, Hutablagen, komplette Fahrzeugtürstruktur, Knotenelemente zum Verbinden von A-Säule und Querträger, Knotenelemente zum Verbinden von A-Säule, Querträger und Längsträger, Bodenversteifungen, Sitzquerträger, Ventildeckel, Lagerschilder für Lichtmaschinen oder Elektromotoren, eingesetzt werden.

9. Verfahren gemäß Anspruch 6, **dadurch gekennzeichnet, dass** als formgebende Verfahren Spritzgießen, Schmelzeextrusion, Pressen, Prägen oder Blasformen angewendet werden.

## Claims

1. Lightweight components composed of a shell-type parent body whose external and/or internal space has reinforcing structures securely connected to the parent body and composed of moulded-on thermoplastics, and having connection to the parent body at discrete connection sites, **characterized in that** polymer moulding compositions are used comprising
A) from 99.99 to 10 parts by weight, preferably from 99.5 to 40 parts by weight, particularly preferably
from 99.0 to 55 parts by weight, of at least one semicrystalline thermoplastic polymer and
B) from 0.01 to 50 parts by weight, preferably from 0.25 to 20 parts by weight, particularly preferably from 1.0 to 15 parts by weight
of at least one copolymer composed of at least one olefin, preferably one α-olefin, with at least one methacrylate or acrylate of an aliphatic alcohol, preferably of an aliphatic alcohol having from 1 to 30 carbon atoms, where the MFI of the copolymer B) is not less than 100 g/10 min, preferably not less than 150 g/10 min.

2. Lightweight components according to Claim 1, **characterized in that** the connection of the moulded-on thermoplastic to the parent body takes place at discrete connection sites by way of perforations in the parent body, where the thermoplastic extends through these and extends over the area of the perforations.

3. Lightweight components according to Claim 1 or 2, **characterized in that** thermoplastics selected from the group of the polyamides, vinylaromatic polymers, ASA polymers, ABS polymers, SAN polymers, POM, PPE, polypropylene or polyarylene ether sulphones or their blends are used, preferably polyamides, polyesters, polypropylene, polycarbonates or their blends, particularly preferably polyamides or the blends of the abovementioned materials with polyamide.

4. Lightweight components according to Claims 1 to 3, **characterized in that** moulding compositions are used for their preparation which also comprise, in addition to components A) and B),
C) from 0.001 to 75 parts by weight, preferably from 10 to 70 parts by weight, particularly preferably from 20 to 65 parts by weight, with particular preference from the 30 to 65 parts by weight, of a filler or reinforcing material.

5. Lightweight components according to Claim 4, **characterized in that** the filler or reinforcing material used comprises glass fibres.

6. Process for the production of a hybrid-form lightweight component whose external and/or internal space has reinforcing structures securely connected to the parent body and composed of moulded-on thermoplastics, and having connection to the parent body at discrete connection sites, **characterized in that** polymer moulding compositions comprising
A) from 99.99 to 10 parts by weight, preferably from 99.5 to 40 parts by weight, particularly preferably from 99.0 to 55 parts by weight, of at least one semicrystalline thermoplastic polymer and
B) from 0.01 to 50 parts by weight, preferably from 0.25 to 20 parts by weight, particularly preferably from 1.0 to 15 parts by weight
of at least one copolymer composed of at least one olefin, preferably one α-olefin, with at least one methacrylate or acrylate of an aliphatic alcohol, preferably of an aliphatic alcohol having from 3 to 50 carbon atoms, where the MFI of the copolymer B) is not less than 100 g/10 min, preferably not less than 150 g/10 min.

7. Use of the lightweight components according to Claims 1 to 5 in the automotive sector and in the non-automotive sector, preferably in motor vehicles, in rail vehicles, in aircraft, in ships, in sleds or in other means of conveyance, in electrical or electronic equipment, in household equipment, in furniture, in heaters, in motor scooters, in shopping trolleys, in shelving, in staircases, in escalator steps, or in manhole covers.

8. Use of the lightweight components according to Claim 7, **characterized in that** these are used in motor vehicles for complete front ends, headlamp frames, pedestrian-protection beam, specific-purpose slam panels for engine hoods or luggage-compartment lids, front roof arches, rear roof arches, roof frames, roof modules (entire roof), sliding-roof support parts, dashboard support parts (cross car beam), steering column retainers, fire wall, pedals, pedal blocks, gear-shift blocks, A, B or C columns, B-column modules, longitudinal members, jointing elements for the connection of longitudinal members and B columns, and of transverse members, and for wheel surrounds, wheel-surround modules, crash boxes, rear ends, spare-wheel recesses, engine hoods, engine covers, engine oil sumps, gearbox oil sumps, oil modules, water-tank assembly, engine-rigidity systems (front-end rigidity system), chassis components, vehicle floor, door seals, door-seal reinforcement systems, floor reinforcement systems, seat reinforcement system, transverse seat members, tail-gates, frames, seat structures, back-rests, seat shelves, seat back-rests with and without integrated safety belt, parcel shelves, complete vehicle-door structure, joint elements for the connection of A column and transverse member, joint elements for the connection of A column, transverse member and longitudinal member, floor rigidity systems, transverse seat members, valve covers, end-shields for generators or electric motors.

9. Process according to Claim 6, **characterized in that** the shaping process used comprises injection moulding, melt extrusion, compression moulding, stamping or blow moulding.

## Revendications

1. Pièces de construction légères à base d'un corps de base en forme de cuvette dont l'extérieur et/ou l'intérieur comporte(nt) des structures de renforcement qui sont solidement assemblées avec le corps de base et qui sont constituées de matières thermoplastiques injectées et dont l'assemblage avec le corps de base est réalisé en des points d'assemblage distincts, **caractérisées en ce qu'**on utilise des matières à mouler polymères contenant
A) 99,99 à 10 parties en poids, de préférence 99,5 à 40 parties en poids, de façon particulièrement préférée 99,0 à 55 parties en poids d'au moins un polymère thermoplastique partiellement cristallin et
B) 0,01 à 50 parties en poids, de préférence 0,25 à 20 parties en poids, de façon particulièrement préférée 1,0 à 15 parties en poids
d'au moins un copolymérisat d'au moins une oléfine, de préférence d'une α-oléfine, avec au moins un ester méthacrylique ou ester acrylique d'un alcool aliphatique, de préférence d'un alcool aliphatique ayant 1-30 atomes de carbone, le MFI du copolymérisat B) n'étant pas inférieur à 100 g/10 min, de préférence 150 g/10 min.

2. Pièces de construction légères selon la revendication 1, **caractérisées en ce que** l'assemblage de la matière thermoplastique injectée avec le corps de base en des points d'assemblage distincts est réalisé au moyen de ouvertures dans le corps de base, par lesquelles la matière thermoplastique pénètre et s'étend sur la surface des ouvertures.

3. Pièces de construction légères selon la revendication 1 ou 2, **caractérisées en ce qu'**on a utilisé des matières thermoplastiques choisies dans le groupe des polyamides, polymères vinylaromatiques, polymères ASA, ABS, SAN, des POM, PPE, du polypropylène ou des polyarylène-éthersulfones ou leurs mélanges, de préférence des polyamides, polyesters, polypropylène, polycarbonates ou des mélanges de ceux-ci, de façon particulièrement préférée des polyamides ou les mélanges des matériaux nommés avec un polyamide.

4. Pièces de construction légères selon les revendications 1 à 3, **caractérisées en ce que** pour leur fabrication on utilise des matières à mouler qui outre les composants A) et B) contiennent encore
C) 0,001 à 75 parties en poids, de préférence 10 à 70 parties en poids, de façon particulièrement préférée 20 à 65 parties en poids, de façon plus particulièrement préférée 30-65 parties en poids d'une matière de remplissage ou de renforcement.

5. Pièces de construction légères selon la revendication 4, **caractérisées en ce qu'**on utilise comme matière de remplissage ou de renfoncement des fibres de verre.

6. Procédé pour la fabrication d'une pièce de construction sous forme hybride, dont l'extérieur et/ou l'intérieur comporte(nt) des structures de renfoncement qui sont solidement assemblées avec le corps de base et qui sont constituées de matières thermoplastiques injectées et dont l'assemblage avec le corps de base est réalisé en des points d'assemblage distincts, **caractérisées en ce qu'**on met en oeuvre par des procédés de formage dans un outil de formage des matières à mouler polymères contenant
A) 99,99 à 10 parties en poids, de préférence 99,5 à 40 parties en poids, de façon particulièrement préférée 99,0 à 55 parties en poids d'au moins un polymère thermoplastique partiellement cristallin et
B) 0,01 à 50 parties en poids, de préférence 0,25 à 20 parties en poids, de façon particulièrement préférée 1,0 à 15 parties en poids
d'au moins un copolymérisat d'au moins une oléfine, de préférence d'une α-oléfine, avec au moins un ester méthacrylique ou ester acrylique d'un alcool aliphatique, de préférence d'un alcool aliphatique ayant 3-50 atomes de carbone, le MFI du copolymérisat B) n'étant pas inférieur à 100 g/10 min, de préférence 150 g/10 min.

7. Utilisation des pièces de construction légères selon les revendications 1 à 5 dans le secteur automobile et dans le secteur non-automobile, de préférence dans des véhicules automobiles, des véhicules sur rail, des aéronefs, des bateaux, des traîneaux ou d'autres moyens de transport, dans des appareils électriques/électroniques, des appareils ménagers, des meubles, des chaudières, des scooters, des caddies, des rayonnages, des marches d'escalier, des marches d'escalier mécanique, des couvercles de regards.

8. Utilisation des pièces de construction légères selon la revendication 7, **caractérisée en ce que** dans des véhicules automobiles on les utilise pour des extrémités avant complètes, des boîtiers de phares, la traverse pour la protection des piétons, des supports complets de verrouillage pour capot de moteur ou couvercle de coffre, l'arceau de toit avant, l'arceau de toit arrière, le châssis de toit, des modules de toit (toit complet), des éléments porteurs de toit ouvrant, des éléments de traverse à l'arrière du tableau de bord (Cross Car Beam), la colonne de direction, le pare-feu, les pédales, les paliers pour pédales, les coulisse de changement de vitesse, les montants A, B, C, le module de montant B, le longeron, des éléments de jonction pour l'assemblage des longerons et des montants B, les traverses, les supports d'aile, les modules d'ailes, les crash boxes, les extrémités arrière, des logements de roue de secours, capots de moteur, couvercles de moteur, carters d'huile-moteur, carters d'huile-boîte, modules huile, le support de réservoir d'eau, des raidisseurs moteur (raidisseur avant), composants de châssis, planchers de véhicules, seuils, renforts de seuil, raidisseurs de plancher, le raidisseur de siège, des traverses de support de sièges, hayons, châssis, structures de sièges, dossiers, coques, dossiers de sièges arrière avec ou sans ceintures intégrées, la tablette arrière, une structure de porte complète de véhicule, des éléments de jonction pour l'assemblage du montant A et de la traverse, des éléments de jonction pour l'assemblage du montant A, de la traverse et du longeron, des raidisseur de plancher, la traverse placée sous les sièges, le couvercle de soupape, des flasques pour générateurs ou moteurs électriques.

9. Procédé selon la revendication 6, **caractérisé en ce qu'**on utilise comme procédés de formage le moulage par injection, l'extrusion de masse fondue, le pressage, l'estampage ou le moulage par soufflage.
